(19) Europäisches Patentamt
European Patent Office
Office européen des brevets

(11) Publication number: **0 358 183 A2**

(12) **EUROPEAN PATENT APPLICATION**

(21) Application number: **89116426.1**

(22) Date of filing: **06.09.89**

(51) Int. Cl.[5]: **C08L 27/06 , C08L 33/04 , C08J 7/04 , C09D 183/04**

(30) Priority: **09.09.88 US 242950**

(43) Date of publication of application: **14.03.90 Bulletin 90/11**

(84) Designated Contracting States: **AT BE CH DE ES FR GB GR IT LI LU NL SE**

(71) Applicant: **THE B.F. GOODRICH COMPANY**
**3925 Embassy Parkway**
**Akron Ohio 44313-1799(US)**

(72) Inventor: **Greenlee, William Samuel**
**31626 Electric Boulevard**
**Avon Lake Ohio 44012(US)**
Inventor: **Vyvoda, Josef Cyril**
**287 Greenbriar Drive**
**Avon Lake Ohio 44012(US)**

(74) Representative: **von Kreisler, Alek, Dipl.-Chem. et al**
**Patentanwälte Von Kreisler-Selting-Werner**
**Deichmannhaus am Hauptbahnhof**
**D-5000 Köln 1(DE)**

(54) **Structures having a silicone elastomer component in juxtaposition with a thermoplastic elastomer.**

(57) Structures are provided having a silicone elastomer component in juxtaposition with a thermoplastic elastomer produced by the copolymerization of one or more vinyl chloride or vinyl chloride type monomers with one or more acrylate monomers wherein the acrylate has the formula

$$C = \overset{R^1}{\overset{|}{C}} - \overset{O}{\overset{\|}{C}} - OR^2 \qquad \text{FORMULA I}$$

wherein $R^1$ is an aromatic, an aliphatic (especially an alkyl), an alkoxy, or combinations thereof, having from 1 to 18 carbon atoms, or a halogen derivative thereof, desirably is methyl, and preferably is hydrogen. $R^2$ is an aliphatic group, especially an alkyl, an aromatic, an alkyl hydroxyl, or combinations thereof, having from 1 to 18 carbon atoms, desirably from 2 to 10 carbon atoms, and preferably from 2 to 8 carbon atoms, or a halogen derivative thereof; or $R^2$ is a hydrocarbyl ether such as alkoxyalkyl, a phenoxyaryl, or a phenoxyalkyl, or combinations thereof having from 2 to 1,000 carbon atoms, desirably from 2 to 18 carbon atoms, and preferably from 2 to 8 carbon atoms, or a substituted halogen, oxygen, nitrogen, or sulfur derivative thereof. The elastomer does not cause the discoloration of the silicone rubber.

EP 0 358 183 A2

# STRUCTURES HAVING A SILICONE ELASTOMER COMPONENT IN JUXTAPOSITION WITH A THERMOPLASTIC ELASTOMER

## FIELD OF THE INVENTION

The present invention relates to structures having a silicone elastomer component in juxtaposition with a thermoplastic organic elastomer. The organic elastomer is produced by the copolymerization of a vinyl chloride monomer or monomers and an acrylate monomer or monomers having the general formula

$$C = \overset{\overset{\displaystyle R^1}{|}}{C} - \overset{\overset{\displaystyle O}{\|}}{C} - OR^2 \qquad \text{FORMULA I}$$

wherein $R^1$ is an aromatic, an aliphatic (especially an alkyl), an alkoxy, or combinations thereof, having from 1 to 18 carbon atoms, or a halogen derivative thereof. $R^2$ is an aliphatic group, especially an alkyl, an aromatic, an alkyl hydroxyl, or combinations thereof, having from 1 to 18 carbon atoms, or a halogen derivative thereof; or $R^2$ is a hydrocarbyl ether such as alkoxyalkyl, a phenoxyaryl, or a phenoxyalkyl, or combinations thereof having from 2 to 1,000 carbon atoms, or a substituted halogen, oxygen, nitrogen, or sulfur derivative thereof. An improvement is achieved in the tendency of the silicone elastomer in juxtaposition with the organic elastomer to discolor.

## BACKGROUND ART

Silicone sealants and coatings which are generally white or clear are often used as caulking and sealing compositions. Specifically such compositions may be used as caulking for a windowpane where the pane is secured to the window jams. It is necessary to use a spacer to maintain the relative position of the window panes during the period while the silicone sealant cures. This period typically ranges from several hours to several weeks. Typical rubbers used as spacers include ethylene-propylene rubber, ethylene-propylene diene methylene (EPDM) rubber, polyolefin/ethylene-propylene diene blend, dynamically vulcanized, and the like. However, such rubbers have been found to leave a stain, such as a yellow color, on the silicone sealant. The elastomer of the present invention does not cause objectionable staining of silicone rubber. Some discoloration may be detected when rigorous scrutiny is used but it is not objectionable. By objectionable staining it is meant staining which is readily perceptible to a casual observer.

## SUMMARY OF THE INVENTION

It is therefore an aspect of the present invention to provide a thermoplastic elastomer which will not cause staining of a silicone elastomer in juxtaposition with it. The elastomer is generally a copolymer made of polyvinyl chloride and acrylate monomers. The acrylate monomers used to make the elastomer of this invention have the general formula

$$C = \overset{\overset{\displaystyle R^1}{|}}{C} - \overset{\overset{\displaystyle O}{\|}}{C} - OR^2 \qquad \text{FORMULA I}$$

wherein $R^1$ is an aromatic, an aliphatic (especially an alkyl), an alkoxy, or combinations thereof, having from 1 to 18 carbon atoms, or a halogen derivative thereof, desirably is methyl, and preferably is hydrogen. $R^2$ is an aliphatic group, especially an alkyl, an aromatic, an alkyl hydroxyl, or combinations thereof, having from 1 to 18 carbon atoms, desirably from 2 to 10 carbon atoms, and preferably from 2 to 8 carbon atoms, or a halogen derivative thereof; or $R^2$ is a hydrocarbyl ether such as alkoxyalkyl, a phenoxyaryl, or a

phenoxyalkyl, or combinations thereof having from 2 to 1,000 carbon atoms, desirably from 2 to 18 carbon atoms, and preferably from 2 to 8 carbon atoms, or a substituted halogen, oxygen, nitrogen, or sulfur derivative thereof. The elastomer is made using from about 10 to about 90 percent of a vinyl chloride type monomer and from about 10 to about 90 percent of an acrylate monomer or monomers.

## DETAILED DESCRIPTION OF THE INVENTION

The present invention relates generally to thermoplastic elastomers which do not cause staining of a silicone in juxtaposition with them. The elastomer is a copolymer made from vinyl chloride and/or one or more vinyl component comonomers and one or more acrylate monomers. The elastomer of the present invention is particularly suitable for windows wherein the silicone rubber component is a sealant and the elastomer supports the windowpane while the silicone cures. Other uses include structures where an elastomer is juxtaposed with a silicone sealant such as weatherstripping, aquariums, boats, and the like. The use of the word "structure" is meant broadly to encompass various objects which could be constructed in accordance with the present invention.

In general, the silicone rubber component of the present invention will comprise silicone rubber sealants or coatings. More technically, the silicone rubbers are known in the art as elastomers but the terms are used interchangeably herein to avoid confusion be tween the silicone layer and the organic layer. These are usually white or clear, although it is envisioned that other colors may be used. The present invention includes two discrete polymer layers, one being the silicone rubber layer and the second being of a thermoplastic elastomer. The elastomer is a copolymer made from one or more vinyl chloride type monomers and one or more acrylate monomers of the general formula

$$C = \overset{\overset{\displaystyle R^1}{|}}{C} - \overset{\overset{\displaystyle O}{\|}}{C} - OR^2 \qquad \text{FORMULA I}$$

wherein $R^1$ is an aromatic, an aliphatic (especially an alkyl), an alkoxy, or combinations thereof, having from 1 to 18 carbon atoms, or a halogen derivative thereof, desirably is methyl, and preferably is hydrogen. $R^2$ is an aliphatic group, especially an alkyl, an aromatic, an alkyl hydroxyl, or combinations thereof, having from 1 to 18 carbon atoms, desirably from 2 to 10 carbon atoms, and preferably from 2 to 8 carbon atoms, or a halogen derivative thereof; or $R^2$ is a hydrocarbyl ether such as alkoxyalkyl, a phenoxyaryl, or a phenoxyalkyl, or combinations thereof having from 2 to 1,000 carbon atoms, desirably from 2 to 18 carbon atoms, and preferably from 2 to 8 carbon atoms. Examples of specific alkoxyalkyl acrylates include methoxymethyl acrylate, butoxyethyl acrylate; ethoxypropyl acrylate, methoxyethyl acrylate, ethoxyethyl acrylate, 2(2-ethoxyethoxy)ethylacrylate, and the like. Examples of specific phenoxyalkyl acrylates include 2-phenoxyethylacrylate and 2-phenoxyethylmethacrylate. In addition to the above $R^2$ ether groups, halogen, oxygen, nitrogen, or sulfur derivatives of such hydrocarbyl ether groups can also be utilized. For example, $R^2$ can be an alkoxyalkyl containing at least one halogen therein in lieu of a hydrogen atom. Examples of specific acrylate monomers include ethyl acrylate, propyl acrylate, butyl acrylate, hexyl acrylate, octyl acrylate, 2-ethyl hexyl acrylate, nonyl acrylate, decyl acrylate, phenyl acrylate, nonylphenyl acrylate, ethyl methacrylate, butyl methacrylate, hexyl methacrylate, 2-ethyl hexyl methacrylate, methoxymethyl acrylate, methoxyethyl acrylate, ethoxyethyl acrylate, butoxyethyl acrylate, ethoxypropyl acrylate, 2(2-ethoxyethoxy)-ethyl acrylate, and the like. Especially preferred acrylate monomers include butyl acrylate, 2-ethyl hexyl acrylate, ethyl acrylate, and the like.

The copolymer is a polyvinyl chloride-acrylate copolymer made from (a) a vinyl chloride type monomer meaning a vinyl chloride monomer and an optional vinyl component comonomer and (b) one or more acrylate monomers. The amount of the optional vinyl component units in the copolymer is from about 0 to about 45 parts by weight with from about 0 to about 20 parts by weight being preferred. In other words, the vinyl chloride constituent can contain up to 50 percent thereof and preferably up to 22 percent thereof by weight of the vinyl component unit. By the term "vinyl component", it is meant a vinyl unit other than vinyl chloride. Such units are well known to the art and to the literature and are derived from vinyl esters wherein the ester portion contains from 1 to 18 carbon atoms such as vinyl acetate; vinylidene chloride; 1,2-dichloroethylene; styrene and styrene derivatives having a total of from 8 to 15 carbon atoms such as alpha-methylstyrene, vinyl toluene, chlorostyrene, chloromethylstyrene; vinyl naphthalene; diolefins having a

total of from 4 to 18 carbon atoms such as butadiene, isoprene, including halogenated diolefins such as chloroprene; monoolefins having a total of from 2 to 18 carbon atoms and preferably 2 to 4 carbon atoms; and the like. Vinyl acetate is a preferred vinyl component monomer which, upon polymerization, becomes a vinyl component unit. The amount of vinyl chloride monomer and optional comonomer utilized is generally from about 10 to about 90 percent, desirably from about 25 to about 80 percent, and preferably about 40 to 65 percent by weight based on the total weight of all monomers in the polyvinyl chloride/acrylate copolymer.

The elastomer of the present invention can be made using conventional polymerization methods such as bulk, suspension, emulsion, dispersion or solution, and preferably using a batch in-situ or a semi-metering suspension polymerization process. A reaction medium, which is preferably water, is added to a reaction vessel. From about 130 to about 190, and preferably from about 140 to about 160 parts of medium per 100 parts total of monomer are added to the reaction vessel. The pressure of the vessel is lowered to from about 1,000 kps to about 450 kps, and preferably to from about 900 kps to about 500 kps. The reaction is run at a temperature of about 45° to about 60° C. The appropriate monomers are charged in the appropriate ratios into the vessel. Initiators and dispersants, or suspending agents, are added which will cause or aid in the polymerization of the vinyl chloride type monomers and of the acrylate monomers. The polymerization is effected with a free radical initiator. Such initiators include alkanoyl, aroyl, alkaroyl, and aralkanoyl diperoxides and monohydroperoxides, azo compounds, peroxy esters, percarbonates, and other free radical type initiators. Examples of such initiators specifically include benzoyl peroxide, lauryl peroxide, diacetyl peroxide, cumene hydroperoxides, methyl ethyl ketone peroxide, diisopropylbenzene hydroperoxide, 2,4-dichlorobenzoyl peroxide, naphthoyl peroxide, t-butyl perbenzoate, di-2-ethyl-hexyl peroxydicarbonate, di-t-butyl perphthalate, isopropyl percarbonate, t-butyl peroxyneodecanoate, dinormal propyl peroxydicarbonate, azo-bisisobutyronitrile, alpha, alpha′-azodiisobutyrate, 2,2′-azo-bis-(2,4-dimethyl valeronitrile), caprylyl peroxide, cyclohexane sulfonyl peroxide, acetyl cyclohexyl sulfonyl peroxide, hydrogen peroxide, methyl hydroperoxide, ethyl hydroperoxide, propyl hydroperoxide, butyl hydroperoxide, or other alkyl hydroperoxides, sec-butyl peroxydicarbonate, isobutyl peroxydicarbonate, and many others. The particular initiator employed will depend upon the monomeric materials being polymerized, the molecular weight and color requirements of the polymer, the temperature of polymerization, etc. Insofar as the amount of initiator employed is concerned, it has been found that an amount in a range of from about 0.005 parts by weight to about 1.00 parts by weight based on 100 parts by weight of the monomer or monomers being polymerized is satisfactory. However, it is preferred to employ an amount of initiator in the range of about 0.1 part by weight to about 0.20 part by weight based on 100 parts by weight of the monomers, i.e., the total weight of the vinyl chloride type monomers and the acrylate monomers.

It is further advantageous to add a small amount of dispersant to the liquid reaction media. The purpose of the dispersant is to obtain a more complete and uniform dispersal of the monomers and initiator throughout the reaction media prior to and during the polymerization of the monomers. Any of the well known dispersants operative in aqueous medium can be employed. These include among others, methyl cellulose, hydroxyl propyl methyl cellulose, polyvinyl alcohol, dodecylamine hydrochloride, sodium lauryl sulfonate, lauryl alcohol, sorbitan monolaurate, polyoxyethylene, nonylphenoxy polyoxyethylene ethanol, hydrolyzed polyvinyl acetates, polyacrylic acid polymers, polyethylene oxide containing surfactants and non-polyethylene oxide containing surfactants, etc. The amount of dispersant employed will be in the range of about 0.01 percent to about 1.0 percent by weight, based on the weight of the monomers, to give satisfactory results. Preferably, however, the dispersant is employed in the range of about 0.02 to about 0.4 percent by weight.

An example of a preferred polymerization process to produce the thermoplastic elastomers of the present invention is described as follows. Water is added to the reaction vessel in ah amount of 100 to 200 parts and preferably 130 to 190 parts per 100 parts monomer. The monomers are charged into the vessel with an initiator or suspending agent. An initiator is used for the reaction which will cause polymerization of the acrylate monomers as well as the vinyl chloride monomers.

The preferred suspension polymerization process to produce the polyvinyl chloride polymers of this invention may be carried out at any temperature which is normal for the monomeric material to be polymerized. Preferably, a temperature in the range of from about 0° C to about 100° C is employed, more preferably from about 40° C to about 85° C and most preferably from about 45° to about 60° C. In order to facilitate temperature control during the polymerization process, the reaction medium is kept in contact with cooling surfaces cooled by water, brine, evaporation, etc. This is accomplished by employing a jacketed polymerization reactor wherein the cooling materials are circulated through the jacket throughout the polymerization reaction. This cooling is necessary since most all of the polymerization reactions are exothermic in nature. It is understood, of course, that a heating medium can be circulated through the

jacket, if necessary.

The elastomer of the present invention may also be made using a semi-metering process wherein the monomers are added stepwise. In the semi-metering process, demineralized water, dispersants and an initiator are charged into the reactor. Acrylic esters and vinyl chloride are charged into the premix tank, where the monomers are premixed and preheated to polymerization temperature. The mixture of the monomers is then transferred into the reactor and agitated steadily from 200 to 800 RPM while maintaining a steady temperature inside the reactor ranging from 40° to 70° C. From fifteen minutes to three hours from the beginning of the polymerization, the metering of an acrylate monomer or mixture of monomers into the reaction vessel can be started and continued over a period of one to five hours. An amount of 2 to about 60 percent of the total amount of acrylic monomers can be metered. At the end of the polymerization, usually at 70 to 95 percent conversion, additional vinyl chloride may be injected into the reactor in an amount of from about 5 to about 25 percent of the total vinyl chloride monomer charged in order to eliminate residual acrylate monomers and increase the hardness of the resin particles. Residual monomers are steam stripped from the resin particles. Antiblocking agents may be added before the stripping operation in order to protect resin particles from stickiness.

The polyvinyl chloride-acrylate copolymer desirably is not crosslinked so that it has good processing properties. However, it is to be understood that it is within the ambit of the present invention to either partially crosslink or crosslink the polyvinyl chloride-acrylate copolymer to provide improved physical properties. Should the polyvinyl chloride-acrylate copolymer be crosslinked or cured, any conventional crosslinking agent can be utilized such as diallyl phthalate, various diacrylates such as butanediol diacrylate, diethylene glycol diacrylate, and the like.

The blend compositions of the present invention can also contain conventional additives in conventional amounts. Thus, various heat stabilizers such as barium/cadmium compounds, lead compounds, and organotin compounds, various conventional lubricants such as paraffin, polyethylene, stearic acid, various processing aids such as polyacrylates, various antioxidants such as BHT, that is butylated hydroxy toluene, BHA, that is butylated hydroxy anisole, various hindered phenols, various UV inhibitors such as substituted benzophenones, and the like, can be utilized.

Various fillers and pigments can also be utilized in conventional amounts such as up to about 200 or 300 parts by weight for every 100 parts by weight of the polyvinyl chloride-acrylate copolymer. Examples of fillers include calcium carbonate, clay, silica, the various silicates, talc, carbon black, and the like. Such fillers are generally added in high amounts as from about 10 to about 200 parts by weight for every 100 parts by weight of the polyvinyl chloride-acrylate copolymer. Examples of various pigments include titanium dioxide, carbon black, and the like. Generally, the amount of such pigment is not as large as the amount of the fillers.

The various additives, fillers, pigments, and the like, along with the plasticizers or blending agent are generally added and blended in any conventional manner. For example, the polyvinyl chloride-acrylate copolymer can be blended with the various additives in a Banbury mixer and then processed on a two-roll mill to produce a sheet which can be cubed and then extruded, injection molded, etc. The polyvinyl chloride-acrylate copolymer can also be mixed with the various additives in a high intensity mixer such as a Henschel mixer and then this powder compound can be processed on a two-roll mill into a sheet and cubed or the powder compound can be processed on an extruder into pellets or into the finished article. In general, any conventional means of compounding such as a Banbury mixer, two-roll mill, extruder, injection molding machine, etc., can be used to produce the products of this invention.

## EXAMPLE 1

Procedure of vinyl chloride monomers/2-ethylhexyl acrylate polymerization.

The polymerization vessel was charged with the following ingredients:

| | |
|---|---|
| Water | 2223 kg. |
| Vinylchloride monomer | 889 kg. |
| 2-ethylhexyl acrylate | 593 kg. |
| Polyvinyl alcohol dispersants | 28.2 kg. |
| Substituted cellulose dispersant | 22.7 kg. |
| Initiator | 0.445 kg. |

The vessel was charged with water and the dispersants first. After evacuation, the mixture of monomers was added and after the mixing of the contents, the temperature was adjusted to 55° C. Lastly, the initiator was added and the reaction started. The polymerization was carried out for 420 minutes after which time the reactor was cooled to room temperature. The polymer was transferred to a stripping vessel to remove unreacted monomers. After the stripping, the polymer was recovered by filtration and dried.

## EXAMPLE 2

Using a polyvinyl chloride/2-ethylhexyl acrylate similar to that given in Example 1, the compounds in Table I were prepared. These compounds were prepared by charging the ingredients to a pilot scale (50 lb. size) Banbury (except for 20-3) and dropping from the Banbury with a stock temperature of approximately 240° to 280° F. The hot Banbury charge was placed on a 20" x 42" heated mill with the roll and stock temperatures as given in Table I. The milled sheets were cut into 6" x 6" plaques and pressed at 320° F using a two minute preheat and three minute press time to give the properties given in Table I. Samples of the milled sheets (except for 20-3) were also cut into cubes and extruded on a Johnson extruder using a 2 1/2", 24:1 screw and a U-channel die.

## EXAMPLE 3

Samples of the extruded strips from Example 2 were cut into approximately 2.75" x 0.25" x 0.03" strips and mounted on 2" x 3" x 0.19" clear glass plates. The samples were then covered with a layer approximately 0.125" thick of a silicone sealant (Spectrum 2 sold by Tremco). The glass plates contacting the samples were placed in cardboard box which was lined with aluminum foil. Also included in the test was a sample of an extruded strip made from Santoprene (a composition sold by Monsanto Corporation and believed to be a polypropylene/EPDM dynamic vulcanizate), a sample of a cured commercial EPDM window gasket compound and a sample of silicone with no test material. In order to reduce experimental error, two samples of both the experimental compounds, as well as the commercial products, were placed into the test apparatus. A sun lamp (GE Model RSM, 275 watts) was mounted over the samples at a height of approximately 12.5" to give a surface temperature of approximately 48° C. The samples were periodically turned over and rotated over a period of 42 days with intermittent observations being made. Following the 42 days, the samples were removed and the observations given in Table II recorded.

The results in Table II indicate that whereas the EPDM based gasket compound significantly stains the silicone sealant and the Santoprene also stains the sealant, the polyvinyl chloride/2-ethylhexyl acrylate based compounds do not stain the sealant. Also these results indicate that both black and white compounds based on the polyvinyl chloride/2-ethylhexyl acrylate copolymer show no staining of the silicone based sealant.

TABLE I

| COMPOUND NO. | 2-1 | 2-2 | 2-3 | 2-4 | 2-5 | 20-3[1] |
|---|---|---|---|---|---|---|
| PVC/2-ethylhexyl acrylate copolymer | 100 | 100 | 100 | 100 | 100 | 100 |
| Chlorinated Polyethylene | - | - | - | - | - | 5 |
| Phosphate Plasticizer | - | - | - | - | - | 5 |
| Antimony Oxide | - | - | - | - | - | 3 |
| Lead Stabilizer | 10 | - | - | - | - | - |
| Barium/cadmium stabilizer | - | 5 | 5 | 5 | 5 | 5 |
| Antioxidant | 0.5 | 0.5 | 0.5 | 0.5 | 0.5 | 0.45 |
| Calcium carbonate 3.5 uncoated | 20 | - | 6 | 20 | 43 | 35 |
| Epoxidized Oil | - | 4 | 3 | 3 | 4 | 3 |
| Lubricant | 0.75 | 0.5 | 0.75 | 0.75 | 0.5 | 0.5 |
| Black Pigment | 2.0 | 2.0 | 2.0 | 2.0 | 2.0 | - |
| Titanium Dioxide | - | - | - | - | - | 10 |

[1] OOC size Banbury, 10 x 20" mill

TABLE I (continued)

| COMPOUND NO. | 2-1 | 2-2 | 2-3 | 2-4 | 2-5 | 20-3[1] |
|---|---|---|---|---|---|---|
| Mill Roll Temperature ($^{o}F$) | 280 | 280 | 200 | 200 | 280 | 260 |
| Stock Temperature ($^{o}F$) | 310 | 305 | 250 | 255 | 325 | 295 |
| Hardness (Shore A) | 73 | 59 | 59 | 65 | 67 | 63 |
| Tensile Strength (psi) | 1340 | 1030 | 1035 | 1100 | 830 | 775 |
| Elongation (%) | 233 | 340 | 294 | 297 | 313 | 327 |

[1] OOC size Banbury, 10 x 20" mill

## TABLE II

| COMPOUND | OBSERVATION[1] |
|---|---|
| Pure Silicone Blank | |
| Sample 1 | No discoloration |
| Sample 2 | No discoloration |
| Santoprene | |
| Sample 1 | Some Yellowness |
| Sample 2 | Some Yellowness |
| Cured EPDM | |
| Sample 1 | Very Yellow |
| Sample 2 | Very Yellow |
| 2-1 | |
| Sample 1 | No discoloration |
| Sample 2 | No discoloration |
| 2-2 | |
| Sample 1 | No discoloration |
| Sample 2 | No discoloration |
| 2-3 | |
| Sample 1 | No discoloration |
| Sample 2 | No discoloration |

[1]Color on the silicone sealant opposite the contact area with the sample.

[2]Strip from milled and pressed sheet used for testing.

TABLE II (continued)

| COMPOUND | OBSERVATION[1] |
|---|---|
| 2-4 | |
| Sample 1 | No discoloration |
| Sample 2 | No discoloration |
| 2-5 | |
| Sample 1 | No discoloration |
| Sample 2 | No discoloration |
| 20-3[2] | |
| Sample 1 | No discoloration |
| Sample 2 | No discoloration |

[1]Color on the silicone sealant opposite the contact area with the sample.

[2]Strip from milled and pressed sheet used for testing.

While in accordance with the Patent Statutes, the best mode and preferred embodiment has been set forth, the scope of the invention is not limited thereto, but rather by the scope of the attached claims.

## Claims

1. A structure having a first component in juxtaposition with a second component, the first component comprising a silicone elastomer;
the second component comprising a polyvinyl chloride-acrylate copolymer, said copolymer made containing from (a) about 10 parts to about 90 parts by weight of vinyl chloride units and optional vinyl component units wherein the amount of said optional vinyl component units is from about 0 to about 45 parts by weight and from (b) about 90 parts to about 10 parts by weight of one or more acrylate units, said acrylate unit, before polymerization, having the formula

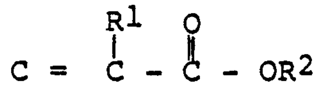

FORMULA I

wherein $R^1$ is an aromatic, an aliphatic, an alkoxy, or combinations thereof, having from 1 to 18 carbon atoms, or a halogen derivative thereof, or hydrogen, and wherein $R^2$ is an aliphatic, an aromatic, an alkyl hydroxyl, or combinations thereof having from 1 to 18 carbon atoms, or a halogen derivative thereof; or a hydrocarbyl ether including an alkoxyalkyl, a phenoxyaryl, a phenoxyalkyl, or combinations thereof, having from 2 to 1,000 carbon atoms, or a substituted halogen, oxygen, sulfur, or nitrogen derivative thereof.

2. A structure as set forth in Claim 1, wherein said vinyl chloride units and optional vinyl component unit comprise from about 25 to about 80 percent of said monomers and said acrylate monomer comprises from about 20 to about 75 percent by weight of said monomers based on the weight of monomer units in the polyvinyl chloride/acrylate copolymer.

3. A structure as set forth in Claim 2, wherein said vinyl chloride units and optional vinyl component unit comprise from about 45 to about 65 percent by weight, and said acrylate monomer comprises from about 35 to about 55 percent by weight based on the weight of the monomer units in the polyvinyl chloride/acrylate copolymer.

4. A structure as set forth in Claim 1, wherein said elastomeric component does not cause the discoloration of said silicone elastomer component.

5. A structure as set forth in Claim 4, wherein $R^1$ is methyl or hydrogen, wherein $R^2$ is an alkyl having from 2 to 10 carbon atoms; or an alkoxyalkyl, or a phenoxyalkyl, having from 2 to 18 carbon atoms, or combinations thereof.

6. A structure as set forth in Claim 5, wherein $R^1$ is hydrogen and $R^2$ is an alkyl having from 2 to 8 carbon atoms.

7. A structure as set forth in Claim 1, wherein said structure is a window and said first component is a sealant and said second component is a spacer.

8. A window having a sealant in juxtaposition with a spacer, the sealant comprising a silicone elastomer; the spacer comprising a polyvinyl chloride acrylate copolymer containing from about 45 to about 60 percent by weight of one or more of a vinyl chloride monomer and optionally one or more vinyl component monomers and from about 40 to about 55 percent by weight of one or more of an acrylate monomer selected from the group consisting of 2-ethylhexyl acrylate, ethyl acrylate, butylacrylate, and 2(2-ethoxyethoxy ethyl) acrylate whereby the spacer does not cause objectionable discoloration of the sealant.